# FASCICULE DE BREVET EUROPEEN

(11) **EP 2 051 904 B1**
(45) Date de publication et mention de la délivrance du brevet: **10.07.2013**
(21) Numéro de dépôt: 07802665.5
(22) Date de dépôt: 16.08.2007
(51) Int. Cl.: B64C 1/00, B64D 37/04, B64G 1/40

(54) **AERONEF A ESPACE UTILE OPTIMISE ET PROCEDE POUR OPTIMISER L'ESPACE UTILE D'UN AERONEF**
FLUGZEUG MIT OPTIMIERTEM NUTZVOLUMEN UND VERFAHREN ZUR OPTIMIERUNG DES NUTZVOLUMENS EINES FLUGZEUGS
AIRCRAFT WITH OPTIMISED UTILITY VOLUME AND METHOD FOR OPTIMISING THE UTILITY VOLUME OF AN AIRCRAFT

(30) Priorité: 18.08.2006 FR 0653398
(43) Date de publication de la demande: 29.04.2009
(73) Titulaire: Airbus, 31700 Blagnac Cédex (FR)
(72) Inventeur: SMITH, Garrett, F-31170 Colomiers (FR)
(74) Mandataire: Ilgart, Jean-Christophe
(86) Numéro de dépôt international: PCT/EP2007/058534
(87) Numéro de publication internationale: WO 2008/022965

(56) Documents cités:
- US-A- 4 807 833
- US-A1- 5 094 409
- US-A1- 5 190 246
- US-A1- 5 350 138
- US-B1- 6 206 328

## Description

### DOMAINE TECHNIQUE ET ART ANTÉRIEUR

La présente invention se rapporte à un aéronef à volume intérieur utile pouvant être optimisé, notamment à un avion ou un engin spatial et à l'utilisation d'une partie d'un système de combustion pour optimiser l'espace utile pour les passagers ou pour les marchandises et à un procédé d'optimisation de l'espace utile d'un aéronef.

Les aéronefs, notamment les avions et les engins spatiaux, comportent un fuselage formant une enveloppe dans lequel se trouve un habitacle pour recevoir des personnes et/ou un chargement et un réservoir de carburant.

Le volume de l'habitacle est limité. Or pour des raisons économiques on cherche à augmenter ce volume, sans pour autant augmenter la masse de l'aéronef, son coût de fabrication et sa consommation en carburant.

Le réservoir des avions est prévu pour permettre à ceux-ci de parcourir de grandes distances. Or un avion peut également servir uniquement comme court ou moyen courrier. Dans ce cas, le réservoir de carburant n'est pas complètement rempli. Cette espace vide est un espace mort car il ne sert pas lors de ces vols de courte ou moyenne distance, alors qu'il pourrait servir à transporter des personnes ou des marchandises supplémentaires, ce qui permettrait d'augmenter la rentabilité de l'avion.

Dans les avions actuels, le carburant type kérosène est généralement stocké dans les ailes ou dans le fuselage. Ce carburant est sous forme liquéfié à toutes les températures et pressions de son utilisation.

Pour les avions futurs et les engins spatiaux actuels, le carburant est à base d'hydrogène ou de méthane, qui doit être stocké dans de grands réservoirs du fait de leur densité plus faible que celle des hydrocarbures. Le comburant pour les engins spatiaux est typiquement l'oxygène liquide qui nécessite aussi des grands réservoirs. Par ailleurs les réservoirs utilisés sont sous forme sphérique ou cylindrique pour maintenir la pression du carburant ou comburant cryogénique (Hydrogène liquéfié, méthane liquéfié ou oxygène liquéfié).

Dans les fusées de type connu, le réservoir contenant le carburant et le comburant forme un étage de la fusée, qui est largué lorsqu'il est vide. Seuls de petits réservoirs sont prévus dans la fusée destinée à être en orbite, afin de permettre le maintien en orbite et les manoeuvres de commande de l'orientation de la fusée.

Il est connu des documents US 5 350 138 et US 6 206 328 des engins spatiaux, dans lesquels le réservoir est extérieur au fuselage de l'engin et est utilisé après consommation du carburant comme extension de l'habitacle initial de l'engin lorsque l'engin est en orbite. Pour cela, un tunnel de passage est prévu entre l'habitacle initial et l'intérieur du réservoir extérieur. Cependant ce réservoir n'est pas immédiatement disponible en tant qu'espace supplémentaire de vie ou de stockage autre que du carburant ; il nécessite d'être aménagé. Par ailleurs, l'engin spatial doit être en orbite. En outre, ceci ne peut s'appliquer aux avions de ligne ou aux avions cargos dont le réservoir se trouve généralement dans le fuselage.

Il est également connu, un avion dans lequel il est possible de retirer ou d'ajouter un réservoir afin de modifier la gamme de l'avion et de l'utiliser comme moyen courrier ou long courrier. Ainsi, le retrait d'un réservoir afin d'utiliser l'avion en tant que court ou moyen courrier, permet d'augmenter la place disponible dans l'avion. Cependant cette modification s'applique seulement au volume cargo et non au volume pour les passagers. Par ailleurs, l'augmentation du volume disponible ne peut être obtenue en vol, par conséquent le gain de place est inopérant dans le cas d'un long courrier.

C'est par conséquent un but de la présente invention d'offrir un avion dont le volume utile pour accueillir des personnes et/ou un chargement peut être augmenté de manière rapide, notamment pour les avions de ligne, les avions cargos au sol ou en vol et les engins spatiaux dès que la phase de combustion des propergols est terminée.

### EXPOSÉ DE L'INVENTION

Le but précédemment énoncé est atteint par un aéronef dans lequel il est possible d'accéder à une partie du réservoir de carburant lorsque celui-ci n'est pas utilisé, augmentant ainsi le volume utile disponible dans l'aéronef tout en conservant une structure extérieure identique. Cette augmentation de volume peut avoir lieu en vol lorsque le carburant contenu dans le réservoir a été consommé, augmentant ainsi le confort des passagers et la place disponible, ou au sol lorsque le réservoir n'est pas complètement utilisé afin d'augmenter le nombre de passagers et/ou le volume de marchandises chargées.

Dans le cas d'un engin spatial, l'invention permet de ménager un espace supplémentaire pour l'équipage, les passagers, le chargement, les animaux, les plantes et les expériences scientifiques, tout en utilisant un engin de même taille. Ainsi la masse du véhicule est réduite relativement à son volume utile, celui-ci utilise donc moins de carburant pour son déplacement, son coût de construction est également moindre, ainsi que l'équipement nécessaire comparativement à un engin de taille supérieure et de volume utile comparable.

Dans le cas d'un avion, la présente invention permet, si l'augmentation du volume utile a été réalisé au sol d'augmenter le nombre de passagers qui ou le volume des marchandises peut être embarqué, ou si l'augmentation de la place disponible a lieu en vol, dans le cas des longs courriers d'augmenter le confort des passagers.

Par ailleurs le fait de pouvoir augmenter le confort des passagers permet d'augmenter le prix des billets, et donc d'augmenter encore la rentabilité de l'aéronef à vocation commercial.

Dans le cas des aéronefs propulsés par de l'hydrogène liquéfié ou du méthane, les réservoirs peuvent être disposés de part et d'autre de la cabine des passagers dans une direction longitudinale de l'aéronef. Par ailleurs, dans le cas des aéronefs propulsés par du carburant et comburant « propre » (l'hydrogène, le protoxyde d'azote et l'oxygène), le réservoir est directement utilisable par les passagers sans besoin d'isoler les parois de celui-ci des passagers.

Dans le cas de carburant à base d'hydrocarbures, une membrane déformable est prévue pour contenir le carburant et isoler les parois du réservoir du carburant. Ainsi, il suffit de plier la membrane vide pour pouvoir utiliser le réservoir comme espace supplémentaire de vie ou de stockage

Par conséquent grâce à la présente invention, dans le cas d'engins spatiaux qui, jusqu'à présent, n'offraient qu'un habitacle très étroit, celui-ci pourra être augmenté de manière importante dés le carburant consommé et l'intérieur du réservoir adapté.

La présente invention s'applique notamment aux réservoirs du type à carburant ou comburant solide ou liquide (oxygène, hydrogène, protoxyde d'azote, kérosène, méthane, caoutchouc ou plastiques.

La présente invention peut être utilisée dans les fusées à trajectoire suborbitale afin d'offrir aux passagers un espace suffisant pour qu'ils puissent profiter de l'effet de la pesanteur réduite. Dans le cas de vols orbitaux et interplanétaires, l'équipage bénéficiera d'un plus grand espace de travail et de repos dès la consommation du carburant contenu dans les réservoirs après le décollage.

En d'autres termes, il est prévu un moyen d'accès à l'intérieur du réservoir à partir de la cabine passager, un moyens d'accès à partir de l'extérieur pour permettre un évacuation des passagers ou de marchandises vers l'extérieur, un moyen de vidange du réservoir et des moyens pour aménager l'intérieur du réservoir pour son usage en tant qu'espace pour les passagers ou de stockage pour les marchandises.

Ces moyens d'aménagement peuvent être par exemple des moyens pour fixer des fauteuils supplémentaires dans le cas d'un aménagement avant le décollage, des moyens gonflables afin de former des fauteuils de lits, des garnitures pour recouvrir les parois nues du réservoir.

La présente invention a alors principalement pour objet un aéronef comportant un fuselage comprenant un habitacle pour recevoir des personnes et/ou un chargement et système de propulsion, ledit système de propulsion comportant au moins un réservoir ou une chambre de combustion, dans lequel une partie du système de propulsion est utilisable comme extension dudit habitacle pour recevoir des personnes et/ou un chargement, ladite partie du système de propulsion étant adjacente à l'habitacle et séparée de l'habitacle par une cloison.

Le système de propulsion peut comporter avantageusement au moins deux réservoirs, un réservoir convertible et un réservoir simple, ladite extension de l'habitacle comportant le réservoir convertible.

Un filtre est alors avantageusement prévu en sortie dudit réservoir convertible pour filtrer les pollutions apportées par les passagers et/ou le chargement dans le réservoir convertible, et éviter de détériorer les moteurs.

Dans un autre mode de réalisation, le réservoir convertible comporte une poche souple pour recevoir un carburant ou comburant et un réceptacle pour contenir la poche, le réceptacle formant l'extension de l'habitacle une fois la poche repliée. Ainsi l'extension de l'habitacle n'est pas contaminée par le carburant ou comburant, par exemple dans le cas où l'aéronef est propulsé par du kérosène. Par ailleurs, aucune pollution provenant des passagers ou du chargement ne peut pénétrer dans la zone de génération de la force de propulsion.

La cloison est avantageusement renforcée de manière à supporter la pression exercée par le carburant dans la poche.

Un élément de renfort souple en forme de toile d'araignée entourant la poche, peut également être prévu.

Selon la présente invention, le réservoir convertible peut comporter au moins une écoutille formée dans le fuselage pour la montée et la descente des passagers et/ou le chargement des marchandises, au moins une sortie d'évacuation d'urgence, une écoutille de communication avec l'habitacle et une vidange du carburant restant. Ainsi l'extension de l'habitacle forme un habitacle à part entière, aussi sûr que l'habitacle d'origine.

Dans le cas où le réservoir convertible comporte une poche, l'écoutille de communication entre le réservoir et l'habitacle comporte un épaulement sur son contour extérieur destiné à venir.en appui contre la cloison selon une direction orientée du réservoir vers l'habitacle sous l'effort exercé par le carburant ou comburant contenu dans la membrane

De manière avantageuse, le réservoir convertible comporte un plancher sur lequel peuvent circuler les passagers ou peut être stocké le chargement. Celui-ci est pré-installé rendant plus rapide et plus facile l'aménagement du réservoir convertible.

Le réservoir convertible peut comporter des moyens de fixation d'éléments d'aménagement et/ou des moyens d'aménagement gonflables destinés à être gonflés lorsque le réservoir convertible est transformé en extension habitable et/ou des éléments d'aménagement dissimulés dans les parois du réservoir convertible.

De manière préférée, les moyens d'aménagement gonflables comportent des garnitures des parois du réservoir convertible.

L'aéronef selon la présente invention peut comporter un système de distribution et de circulation d'air entre l'habitacle et l'extension de l'habitacle. Par exemple, ledit système de distribution et de circulation d'air comporte des conduits gonflables du côté de l'extension de l'habitacle.

L'aéronef peut être un avion de ligne ou un avion cargo.

Les réservoirs convertible et simple peuvent alors se trouver de part et d'autre de l'habitacle selon une direction longitudinale de l'aéronef.

Les réservoirs de l'aéronef peuvent être destinés à contenir de l'hydrogène liquéfié ou de l'oxygène liquéfié, ou du kérosène. Dans ce dernier cas, le réservoir convertible et le réservoir simple peuvent se trouver en partie dans les ailes et en partie dans les flancs de l'aéronef, les réservoirs convertibles étant disposés dans les flancs de l'aéronef.

L'aéronef peut également être un engin spatial.

La chambre de combustion peut alors être la partie utilisable du système de propulsion disposée en arrière de la cabine de pilotage dans le sens de lancement de l'engin spatial par fermeture d'un rétreint.

Avantageusement, il est alors prévu une membrane destinée à venir recouvrir les parois de la chambre de combustion lorsqu'elle est transformée en extension de l'habitacle, afin d'isoler les passagers des parois de la chambre de combustion et des résidus de combustion. La membrane peut être déployée au moyen d'une source pneumatique.

L'engin spatial selon l'invention peut être propulsé au moyen de protoxyde d'azote liquéfié et de caoutchouc (HTPB : Hydroxyl-terminated polybutadiene).

La présente invention a également pour objet l'utilisation d'une partie d'un système de combustion d'un aéronef disposé à l'intérieur d'un fuselage d'aéronef comme extension d'habitacle pour recevoir des personnes et/ou un chargement.

La présente invention a également pour objet un procédé d'extension de l'habitacle d'un aéronef muni d'au moins deux réservoirs, comportant l'étape de transformation d'un deux réservoirs en zone habitable au sol avant le décollage de l'avion. Lors de cette étape, des plateformes munies de fauteuils peuvent être fixées dans le réservoir.

La présente invention a également pour objet un procédé d'extension de l'habitacle d'un aéronef dans une partie d'un système de propulsion dudit aéronef comportant une étape de transformation de ladite partie du système de propulsion en vol.

Lorsque le système de propulsion de l'aéronef comporte au moins deux réservoirs, le procédé peut comporter les étapes :
a) de vidange d'un des réservoirs presque vide,
b) de mise en place d'éléments d'aménagement.

Dans un mode de réalisation, entre l'étape a) et l'étape b), une étape de pliage d'une poche ayant contenu un carburant.

La présente invention a également pour objet un procédé d'extension de l'habitacle d'un aéronef dans lequel le système de propulsion comporte une chambre de combustion, comportant les étapes :
a') de fermeture d'un rétreint pour isoler la chambre de combustion de l'environnement extérieur à l'aéronef,
b') de mise en place d'une atmosphère dans la chambre de combustion.

Entre les étapes a') et b'), il est avantageusement prévu une étape de déploiement d'une membrane pour recouvrir l'intérieur de la chambre de combustion, l'atmosphère étant mise en place à l'intérieur de cette membrane.

### BRÈVE DESCRIPTION DES DESSINS

La présente invention sera mieux comprise à l'aide de la description qui va suivre et des dessins annexés, sur lesquels :
- la figure 1 est une représentation schématique en perspective d'une portion d'avion selon la présente invention,
- les figures 2A et 2B sont des vues en coupe transversales d'un réservoir convertible selon la présente invention dans un état non aménagé et dans un état aménagé,
- la figure 3 est une vue en perspective d'une variante de réalisation d'un avion selon la présente invention,
- les figures 4A et 4B sont des représentations schématiques de l'intérieur d'un engin spatial selon la présente invention lorsque le volume habitable est limité au poste de pilotage et lorsque celui est étendu dans un réservoir,
- les figures 5A et 5B sont des vues de face et en coupe transversale d'une cloison adaptée au réservoir des figures 4A et 4B,
- la figure 6 est une vue de face d'un renfort adapté au réservoir des figures 4A et 4B,
- la figure 7 est une vue en coupe longitudinale schématique d'un système de distribution et de circulation d'air adapté à un aéronef selon la présente invention,
- la figure 8 est une vue en coupe longitudinale schématique d'un autre mode de réalisation de la présente invention.

### EXPOSÉ DÉTAILLÉ DE MODES DE RÉALISATION PARTICULIERS

Les mêmes références seront utilisées pour les différents modes de réalisation pour désigner les éléments ayant la même fonction.

On entend par réservoir dans la présente demande, un lieu de stockage de carburant et/ou de comburant liquide ou solide ou gazeux, il peut s'agir par exemple de kérosène ou du protoxyde d'azote, de méthane liquéfié ou de l'oxygène liquéfié.

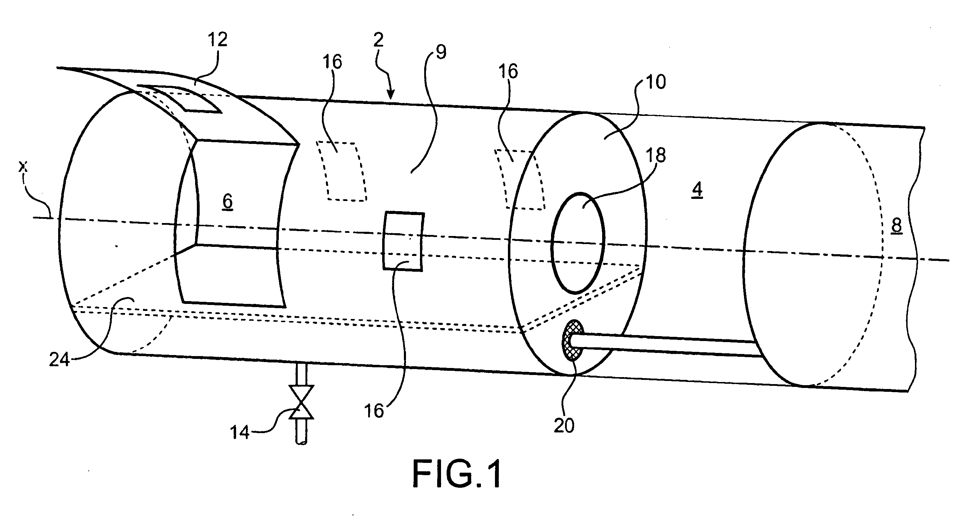

Sur la figure 1, on peut voir un premier mode de réalisation d'un aéronef selon la présente invention comportant un fuselage 2 dans lequel sont aménagés une cabine 4 ou habitacle pour les passagers et au moins deux réservoirs 6, 8 de carburant.

Le premier réservoir 6 sera appelé réservoir convertible et le deuxième réservoir 8 sera désigné réservoir simple.

Dans ce mode de réalisation, l'aéronef est un avion comportant un système de propulsion fonctionnant à hydrogène liquéfié, et plus généralement un avion propulsé par un carburant « propre ». On entend, dans la présente demande, par carburant ou comburant propre, un carburant ou comburant qui ne laisse pas de trace après sa consommation et qui n'est pas toxique pour les êtres humains, comme l'oxygène liquéfié, le protoxyde d'azote ou l'hydrogène liquéfié.

Le système de propulsion comporte au moins deux réservoirs.

Dans le cas d'un avion propulsé par hydrogène liquéfié, il est prévu de disposer les réservoirs de carburant de part et d'autre de la cabine 4 des passagers dans une direction longitudinale X du fuselage 2. En effet, ce carburant cryogénique ayant une densité inférieure à celles des carburants à base d'hydrocarbures, celui-ci doit être contenu dans des réservoirs pressurisés étanches pour optimiser les performances générales de l'avion. La densité inférieure du carburant cryogénique nécessite des grands réservoirs, plus importants que des réservoirs pour le kérosène. La haute pression des propergols cryogénique ou protoxyde d'azote requiert aussi des réservoirs efficaces d'un point de vue structurel. Les formes les plus avantageuses pour contenir des gros volumes en haute pression sont la sphère et le cylindre. Les réservoirs des avions à hydrogène ou méthane sont prévus dans le fuselage et non dans les ailes. En outre, un réservoir de forme sphérique ou cylindrique est plus efficace pour l'isolation thermique car la surface d'un réservoir est réduite par rapport à son volume son volume.

L'habitacle 4 est séparé du réservoir convertible 6 par une paroi 10.

Le réservoir convertible 6 est délimité radialement par une paroi périphérique 9 formée par une portion du fuselage 2.

Selon la présente invention, il est prévu dans cette paroi 9 au moins un moyen d'accès 12 à partir de l'extérieur, du type écoutille.

Cette écoutille 12 peut être de taille réduite pour permettre l'embarquement et le débarquement des passagers, ou de taille importante pour permettre le chargement et le déchargement des marchandises ou la mise en place et le retrait de plateformes entières munies de sièges afin d'augmenter la capacité en places assises de l'avion. Dans l'exemple représenté, l'écoutille 12 est de grande taille et comporte une écoutille de plus petite taille.

Des moyens étanches (non représentés) aux carburants sont prévus au niveau de l'écoutille 12 afin d'éviter toute fuite de carburant entre l'écoutille 12 et le fuselage 2.

Dans le cas d'une écoutille de taille réduite, son impacte sur le réservoir est réduit. Par contre dans le cas d'une grande ouverture, celle-ci est adaptée pour réduire son impact sur la tenue mécanique du réservoir.

Il est également prévu au moins un moyen de vidange 14 du réservoir convertible 6 afin de vider entièrement celui-ci du carburant résiduel. Ce moyen de purge 14 est par exemple une vanne raccordant l'intérieur du réservoir convertible 6 et l'intérieur du réservoir 8, ou l'intérieur du réservoir convertible 6 et l'environnement extérieur.

Dans le cas d'un réservoir convertible 6 destiné à servir d'habitacle supplémentaire, il est prévu des moyens d'évacuation d'urgence 16 répartis sur toute la portion du fuselage délimitant le réservoir convertible afin de permettre une évacuation accélérée des passagers de l'avion. Des moyens d'étanchéité tels que décrits précédemment pour l'écoutille 12 sont également prévus au niveau de ces portes d'évacuation 16. Ils peuvent être de structure plus simple, puisque ces moyens d'accès 16 ont un usage exceptionnel et il peut être prévu de changer ces joints après chaque utilisation des portes d'évacuation d'urgence.

Ces moyens d'évacuation d'urgence comportent des toboggans d'évacuation et/ou des moyens de type connu pour permettre une évacuation rapide et sûre des passagers.

Dans l'exemple représenté ces portes d'évacuation sont au nombre de trois, l'écoutille 12 formant également en cas d'urgence une sortie d'urgence. Cependant leur usage étant limité à des cas exceptionnels, leur structure est de réalisation moins complexe que celle de l'écoutille 12 qui peut être destinée à fonctionner par exemple à chaque vol.

Selon la présente invention, et en particulier dans le cas où le réservoir convertible est destiné à servir d'habitacle supplémentaire, il est prévu une écoutille d'accès 18 dans la paroi 10 séparant l'habitacle 4 et le réservoir convertible 6. Ainsi lorsque le réservoir convertible 6 est vide, les passagers peuvent emprunter cette écoutille 18 pour accéder à l'espace supplémentaire formé par le réservoir convertible.

De manière avantageuse, il est également prévu un filtre 20 au niveau d'une vanne de sortie du carburant du réservoir convertible 6 en direction des moteurs afin de récupérer toutes les pollutions apportées par l'usage du réservoir convertible 6 en tant que lieu de stockage ou de vie, qu'un nettoyage même poussé peut ne pas retirer.

De manière avantageuse, il est également prévu un sol 24 de chargement ou de déplacement pour les passagers. En effet, un réservoir d'avion est de forme tubulaire sans fond plan. Le sol 24.est pré-installé dans le réservoir convertible 6, divisant le volume intérieur du réservoir convertible 6 en deux volumes supérieur et inférieur, des moyens de communication entre les deux volumes étant prévus pour l'écoulement du carburant.

Le réservoir convertible 6 comporte également des moyens pour permettre son aménagement en lieu de vie ou de stockage.

Dans le cas, notamment où le réservoir convertible 6 est transformé en habitacle supplémentaire au sol, i.e. lorsque l'avion est destiné à effectuer des courtes distances, le réservoir convertible 6 n'étant alors pas utilisé en tant que réservoir de carburant, l'intérieur du réservoir convertible 6 comporte alors des moyens pour permettre le montage de fauteuils supplémentaires, par exemple les fauteuils sont montés sur des plateformes (non représentés) qui sont chargées directement dans l'avion par l'écoutille 12 de grande taille et fixées sur le sol 24.

Dans le cas d'un avion long courrier, le réservoir convertible est au début de vol rempli de carburant, puis celui-ci va se vider en premier, l'alimentation en carburant étant ensuite obtenue par le réservoir simple 8. Lorsque le réservoir convertible 6 est vide, il peut être converti lors du vol en lieu de vie supplémentaire pour les passagers, par exemple pour le couchage des passagers.

L'aménagement du réservoir convertible 6 peut être réalisé avec des éléments stockés par ailleurs dans l'avion puis acheminés et installés dans le réservoir convertible 6 lorsque celui-ci est vide. Cependant cette solution est relativement contraignante, puisqu'elle nécessite un transport et une fixation des éléments d'aménagement. Par ailleurs ces éléments occupent un volume utile important, rendant l'invention moins avantageuse. Dans cet exemple, des moyens de fixations rapides, type patte de fixation 25, des éléments d'aménagement sont prévus sur le sol 24 et les parois du réservoir convertible 6, ce qui permet de réduire les temps de transformation du réservoir convertible 6.

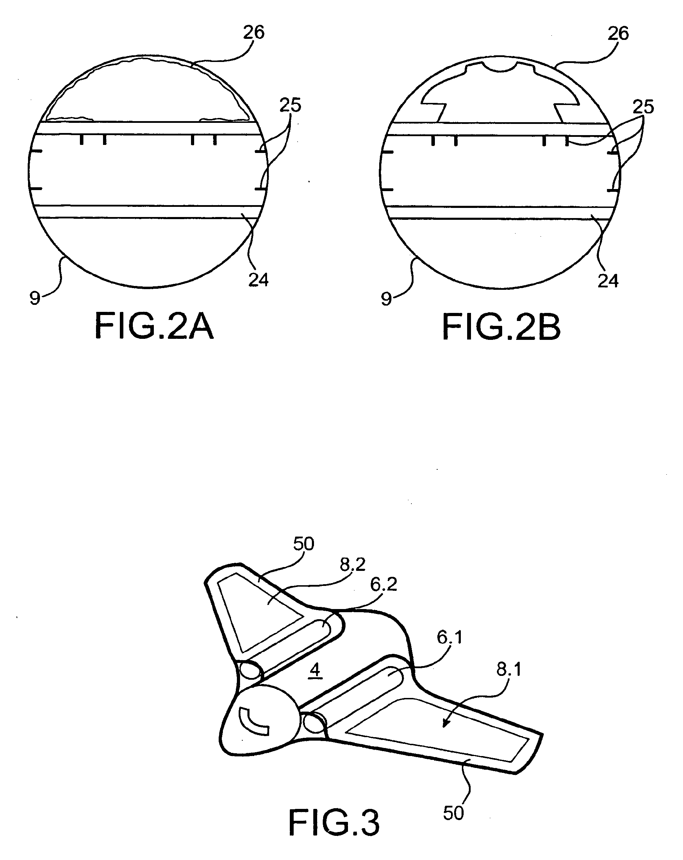

De manière particulièrement avantageuse et comme représenté sur les figures 2A et 2B, il peut être prévu d'utiliser des éléments d'aménagement gonflables 26, par exemple des garnitures de la paroi intérieure du réservoir convertible 6, des fauteuils et/ou des lits. Ces éléments sont alors intégrés dans la paroi du réservoir convertible 6 et dans le sol 24, et sont déployés lorsque le réservoir convertible 6 est vide. Ces éléments d'aménagement présentent les avantages suivantes :
- ils sont légers,
- ils présentent un volume presque nul dans un état dégonflé offrant ainsi un volume de stockage de carburant maximum dans le réservoir convertible 6,
- ils peuvent être rapidement déployés et dégonflés rendant ainsi rapide et aisé la conversion du réservoir convertible à la fois en un lieu de vie et en un réservoir de carburant.

Sur la figure 2A, les aménagements gonflables sont dégonflés et sur la figure 2B, les éléments gonflables sont déployés.

Un exemple de gain de place obtenu grâce à la présente invention va être donné ci-dessous.

Un réservoir convertible 6 peut contenir 150 m³ d'hydrogène liquéfié, ce qui correspond à une masse d'environ 10 tonnes. Ce volume dans le cas d'avions effectuant de courtes distances pour lesquelles le réservoir convertible n'est pas utilisé, celui-ci peut être aménagé au sol pour accueillir des passagers supplémentaires, par exemple à l'aide des plateformes de fauteuils telles que décrites précédemment. Il est par ailleurs prévu en moyenne 200 kg et 3 m³ par passager dans le cas d'une plateforme. Par conséquent, le gain en passagers est de 50, ce qui correspond à une capacité augmentée de 10 % pour un avion pouvant transporter habituellement 500 passagers. La rentabilité de l'avion est donc augmentée de manière significative.

Nous allons maintenant décrire une opération de conversion en vol du réservoir convertible 6.

Les deux réservoirs 6, 8 sont remplis de carburant et les passagers sont installés dans l'habitacle 4.

L'avion décolle et consomme le carburant contenu dans le réservoir convertible 6.

A un certain moment du vol, quasiment tout le carburant contenu initialement dans le réservoir convertible 6 est utilisé. L'alimentation s'effectue alors par le réservoir 8.

Le réservoir convertible 6 est alors vidangé par les moyens 14.

Ensuite l'intérieur du réservoir convertible 6 est ensuite aménagé pour recevoir des personnes. Cet aménagement peut s'effectuer de manière automatique par gonflage ou manuellement par montage d'équipements entreposés par ailleurs dans l'avion.

Le réservoir convertible 6 forme alors un habitacle supplémentaire que les passagers peuvent occuper.

Pour la transformation en réservoir, il suffit de retirer les équipements ou de les dégonfler et de refermer de manière étanche la porte de communication entre l'habitacle et le réservoir convertible 6.

Sur la figure 3, on peut voir une variante de réalisation d'un avion selon la présente invention, dans lequel les réservoirs de carburant 8.1, 8.2, 6.1, 6.2 sont disposés dans les ailes 50 et en partie dans les flans de l'avion à l'intérieur du fuselage 2. Les parties 6.1, 6.2 à l'intérieur du fuselage peuvent être transformées en espace utile supplémentaire comme décrit précédemment.

On peut prévoir que les deux réservoirs 6 et 8 soient convertibles, le choix du réservoir à convertir parmi les deux étant effectué selon la nécessité.

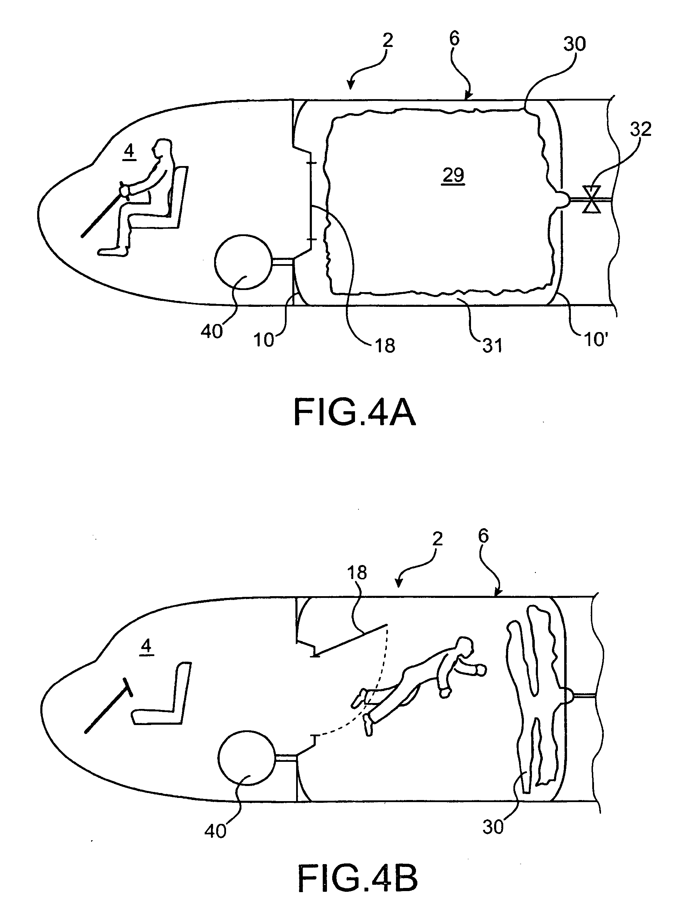

Sur les figures 4A et 4B, on peut voir un deuxième mode de réalisation de la présente invention, appliqué à un engin spatial, mais elle peut s'appliquer également à un avion de ligne ou un avion cargo.

Dans le mode de réalisation décrit, l'engin spatial comporte des moyens de propulsion hybrides utilisant un comburant formé de protoxyde d'azote liquéfié et un carburant de caoutchouc (HTPB : Hydroxyl-terminated polybutadiene).

Le réservoir du comburant est disposé juste derrière la cabine de pilotage 4. La chambre de combustion du carburant n'est pas indiquée.

Selon la présente invention, le réservoir convertible 6 est une poche 29 souple formée par une membrane 30 étanche pour contenir le carburant et l'isoler de l'environnement extérieur disposé dans un réceptacle 31.

Cette poche 30 recouvre les parois intérieures du réceptacle 31. Lorsque la poche 29 est vide, celle-ci est repliée, par exemple en créant le vide à l'intérieur de celle-ci afin de dégager le volume intérieur du réceptacle comme représenté sur la figure 4B.

Le protoxyde d'azote liquéfié peut être stocké à température ambiante, par conséquent la membrane utilisée 30 n'a pas besoin d'offrir de caractéristiques d'isolation particulières.

Cependant du fait de la pression importante à laquelle est soumise la membrane 30 à une température de 20°C, il est prévu de manière avantageuse de renforcer mécaniquement la membrane.

Dans un premier exemple de réalisation, les parois du réceptacle 31 offrent des propriétés mécaniques suffisantes pour résister à cette pression

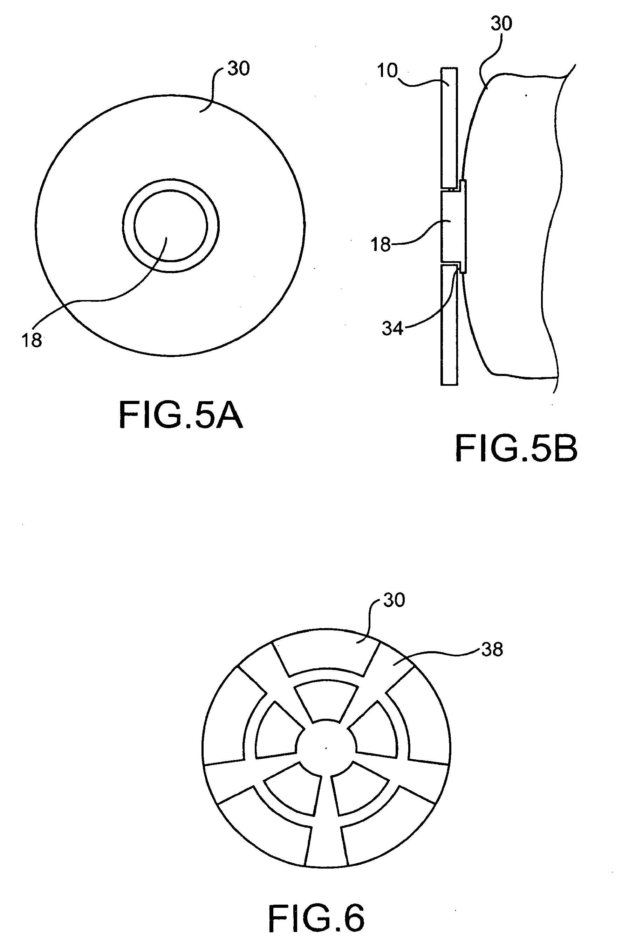

Notamment, il est prévu de réaliser la cloison de séparation 10 entre le poste de pilotage et le réservoir convertible 6 ayant les propriétés mécaniques suffisantes pour résister à cette pression, la membrane 30 venant en appuie sur la paroi 10, comme représenté sur les figures 5A et 5B. Une cloison 10' ayant également les propriétés de la cloison 10 est prévue pour délimiter l'autre extrémité du réservoir de combustible. Le fuselage quant à lui est prévu en général pour résister à de telles pressions, du fait des sollicitations extérieures.

Dans l'exemple représenté en figure 5A et 5B, l'accès à l'intérieur du réservoir convertible 6 est obturé lorsque la poche est remplie avec du carburant, par l'écoutille 18 comportant un épaulement 34 sur toute sa périphérie extérieure, monté dans le passage de la cloison 10 de manière à venir en appui contre le bord du passage afin de former une paroi fermée plane pour supporter la membrane 30.

Lorsque la poche 29 est vide, aucun effort ne s'applique plus sur l'écoutille 18 qui est retirée en même tant que la membrane 30.

Dans cet exemple, l'écoutille 18 est solidaire de la membrane 30. Mais on peut prévoir que l'écoutille 18 soit solidaire de la cloison 10 par des charnières comme représentées sur la figure 4B.

Des réservoirs contenant des propergols sont prévus dans les aéronefs en orbite pour effectuer la désatellisation de l'aéronef. Ceux-ci sont donc remplis et ne sont pas disponibles pour la conversion. Un réservoir pour les propergols de désatellisation séparé du réservoir principal pour le lancement est donc prévu pour permettre l'utilisation du réservoir principal dés qu'il est vide.

Sur la figure 6, on peut voir un autre exemple de réalisation, dans lequel le renfort est réalisé en forme de toile d'araignée flexible 38 entourant la poche 29, et non par le réceptacle 31.

Un tel renfort peut être utilisé en combinaison avec la cloison représentée sur les figures 5A et 5B.

Il est également prévu une réserve 40 d'air pour rendre habitable l'espace supplémentaire formé par le réceptacle vide.

Pour l'aménagement intérieur de cet espace supplémentaire, il peut être utilisé des équipements pré-installés, ceux-ci sont alors prévus pour supporter la pression

Dans le cas où, aucune membrane n'est prévue comme dans le premier mode de réalisation, les équipements pré-installés sont conçus pour ne pas être dégradés par le carburant ou comburant liquide qui peut s'infiltrer derrière les panneaux de protection.

On peut également prévoir de manière très avantageuse d'utiliser des équipements gonflables de manière à amortir les chocs et éviter les blessures des occupants, comme ceux décrits en relation avec les figures 2A et 2B.

Par ailleurs leur mise en place est très rapide, ce qui est particulièrement avantageux dans le cas d'engins spatiaux à utilisation suborbital, la durée de la pesanteur sera typiquement de 3 à 5 minutes pour un vol entre 100 km et 160 km d'altitude. Des équipements montables sont moins avantageux en raison du temps d'installation court.

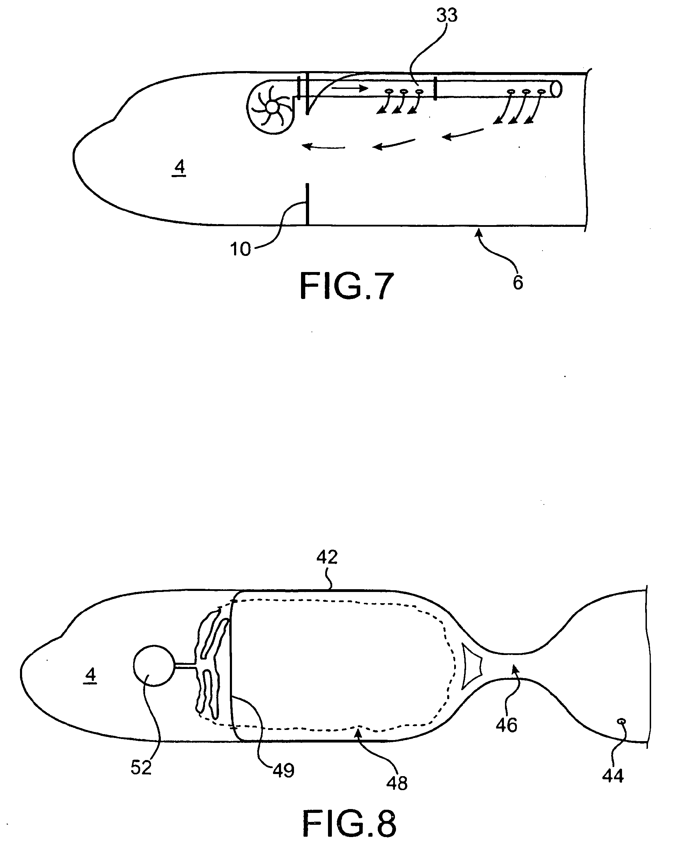

Par exemple, comme cela est représenté sur la figure 7, un système de distribution d'air et de recirculation de l'air 33 est prévu, celui-ci peut également comporter des conduits gonflables afin d'amener l'air à partir de l'habitacle d'origine 4 dans l'habitacle supplémentaire.

La poche se vide naturellement en raison de la différence de pression entre l'intérieur de l'aéronef (1 atmosphère) et l'extérieur (le vide) et via une valve 32 ou via une valve du système propulsif qui emmène le comburant à la chambre de combustion.

On peut également prévoir des fenêtres dans le réservoir convertible 6.

Le réceptacle formant partie du réservoir convertible peut également être utilisé comme sas d'aérage pour réaliser des activités hors de l'engin spatial. Pour cela il suffit de refermer l'accès (l'écoutille 18) entre l'habitacle 4 et le réservoir convertible 6, d'ajuster la pression au moyen d'une vanne ou d'une pompe et d'ouvrir l'écoutille 12 vers l'extérieur. Ainsi cet espace remplit une fonction double de réservoir et de zone d'aérage, ce qui permet de réduire la masse totale de l'engin.

Nous allons maintenant expliquer la transformation du réservoir convertible.

Après le lancement de l'engin spatial, le réservoir convertible 6 est vide ; celui-ci peut alors être converti en habitacle supplémentaire.

Pour cela, la poche 29 est vidangée afin d'évacuer tous le carburant ou comburant restant.

Puis la poche 29 est pliée, par exemple en créant le vide à l'intérieur de la poche 29 au moyen d'une pompe à vide ou le vide naturel dans l'espace ; une atmosphère habitable est alors créée dans le réceptacle 31 au moyen du système de distribution et de circulation d'air à une pression déterminée.

L'espace intérieur du réceptacle 31 recevant la membrane 30 est alors disponible pour être utilisé comme zone habitable.

Sur la figure 8, on peut voir un troisième mode de réalisation de la présente invention appliqué à une fusée comportant un système de propulsion avec carburant et/ou comburant solide muni d'une chambre de combustion 42, une écoutille 49 est prévue dans le fond de la chambre de combustion 42 du côté de la cabine de pilotage 4 pour permettre l'accès à l'intérieur de la chambre de combustion à partir de la cabine de pilotage 4.

Le carburant est brûlé dans la chambre de combustion 42 et s'évacue avec les gaz d'échappement par un retreint 46 et une buse d'évacuation 44. Cette chambre de combustion 42 peut alors être convertie en espace de vie pour l'équipage en fermant simplement le rétreint 46 accessible par l'écoutille 49.

De manière avantageuse, il peut être prévu de recouvrir la surface intérieure de la chambre de combustion avec une membrane 48, qui serait avantageusement déployée depuis la cabine de pilotage. La membrane 48 est alors protégée de la chaleur produite dans la chambre de combustion. La membrane isole l'équipage d'éventuels résidus de combustion et éviter la pollution de l'atmosphère de l'habitacle de la fusée, cette membrane est déployée au moyen d'une réserve d'air 52 connectée au volume intérieur de la membrane 48. Un accès (non représenté) à l'intérieur de la membrane 48 est également prévu.

Le réservoir du comburant peut se trouver ailleurs dans l'aéronef pour un système hybride caoutchouc/protoxyde d'azote. Pour un système de propulsion solide, le comburant et carburant sont déjà mélangés dans la chambre dans une matrice composée de caoutchouc et donc prêt à être utilisés.

Grâce à cette augmentation du volume de l'espace habitable, le confort de l'équipage est amélioré de manière importante réduisant l'inconfort dû à des espaces réduits.

Dans le cas où il y a une chambre de combustion avec le caoutchouc et un réservoir de protoxyde d'azote, le réservoir peut également servir d'extension pour l'habitacle. Pour les fusées traditionnelles à propergols solides, il n'y a pas de réservoir, les propergols se trouvent dans la chambre de combustion.

La présente invention présente l'avantage par rapport à des avions dans lequel on enlève un des réservoirs pour augmenter sa capacité de transport lorsqu'il fait des trajets courts, de permettre une transformation plus rapide et beaucoup plus aisée puisque les connexions du réservoir avec le système de propulsion ne sont pas modifiés. En plus, la structure d'un réservoir intégré est plus efficace qu'un réservoir démontable et donc l'avion et moins lourd et consomme moins de carburant.

La deuxième forme de réalisation s'applique avantageusement à un avion dont le carburant est du kérosène que l'on souhaite isolé des passagers et des marchandises. Mais on pourrait utiliser un réservoir muni d'une poche pour contenir de l'hydrogène liquide ou tout autre carburant « propre », ce qui permettrait de réduire les contraintes d'étanchéité notamment sur l'écoutille.

## Revendications

1. Aéronef comportant un fuselage (2) comprenant un habitacle (4) pour recevoir des personnes et/ou un chargement et un système de propulsion, ledit système de propulsion comportant au moins un réservoir (6) et/ou une chambre de combustion (42), dans lequel une partie du système de propulsion est utilisable comme extension dudit habitacle (4) pour recevoir des personnes et/ou un chargement, **caracterisé en ce que** ladite partie du systèm de propulsion est adjacente à l'habitacle (4) et séparée de l'habitacle par une cloison (10).

2. Aéronef selon la revendication 1, dans lequel le système de propulsion comporte au moins deux réservoirs (6, 8, 6.1, 6.2, 8.1, 8.2), un réservoir convertible (6, 6.1, 6.2) et un réservoir simple (8, 8.1, 8.2), ladite extension de l'habitacle (4) comportant le réservoir convertible (6, 6.1, 6.2).

3. Aéronef selon la revendication 2, dans lequel un filtre (20) est prévu en sortie dudit réservoir convertible (6, 6.1, 6.2) pour filtrer les pollutions apportées par les passagers et/ou le chargement dans le réservoir convertible (6, 6.1, 6.2).

4. Aéronef selon la revendication 2, dans lequel le réservoir convertible (6, 6.1, 6.2) comporte une poche souple (29) pour recevoir un carburant ou comburant et un réceptacle (31) pour contenir la poche (29), le réceptacle (31) formant l'extension de l'habitacle une fois la poche (29) repliée.

5. Aéronef selon la revendication précédente, dans lequel la cloison (10) est renforcée de manière à supporter la pression exercée par le carburant dans la poche.

6. Aéronef selon la revendication 4 ou 5, dans lequel un élément de renfort (38) souple en forme de toile d'araignée entoure la poche.

7. Aéronef selon l'une des revendications 2 à 6, dans lequel le réservoir convertible comporte au moins une écoutille (12) formée dans le fuselage pour la montée et la descente des passagers et/ou le chargement des marchandises, au moins une sortie d'évacuation d'urgence (16), une écoutille de communication (18) avec l'habitacle (4) et une vidange (14) du carburant restant.

8. Aéronef selon la revendication précédente dans lequel l'écoutille de communication (18) entre le réservoir convertible (6, 6.1, 6.2) et l'habitacle (4) comporte un épaulement (34) sur son contour extérieur destiné à venir en appui contre la cloison (10) selon une direction orientée du réservoir vers l'habitacle (4) sous l'effort exercé par le carburant contenu dans la poche (29).

9. Aéronef selon l'une des revendications 2 à 8, dans lequel le réservoir convertible (6, 6.1, 6.2) comporte un plancher (24) sur lequel peuvent circuler les passagers et/ou peut être stocké le chargement.

10. Aéronef selon l'une des revendications 2 à 9, dans lequel le réservoir convertible (6, 6.1, 6.2) comporte des moyens de fixation (25) d'éléments d'aménagement et/ou des moyens d'aménagement gonflables (26) destinés à être gonflés lorsque le réservoir convertible (6, 6.1, 6.2) est transformé en extension habitable et/ou des éléments d'aménagement dissimulés dans les parois du réservoir convertible (6, 6.1, 6.2).

11. Aéronef selon l'une des revendications 1 à 10, dans lequel un système de distribution et de circulation d'air (33) est prévu entre l'habitacle et l'extension de l'habitacle.

12. Aéronef selon l'une la revendication 11, dans lequel ledit système de distribution et de circulation d'air (33) comporte des conduits gonflables du côté de l'extension de l'habitacle.

13. Aéronef selon l'une des revendications 1 à 12, formant un avion.

14. Aéronef selon la revendication 13, dans lequel le réservoir convertible (6) et le réservoir simple (8) se trouvent de part et d'autre de l'habitacle selon une direction longitudinale (X) de l'aéronef.

15. Aéronef selon la revendication 13, dans lequel le réservoir convertible (6.1, 6.2) et le réservoir simple (8.1, 8.2) se trouvent en partie dans les ailes et en partie dans les flancs de l'aéronef, les réservoirs convertibles (6.1, 6.2) étant disposés dans les flancs de l'aéronef.

16. Aéronef selon l'une des revendications 1 à 12 formant un engin spatial.

17. Aéronef selon la revendication 16, dans lequel la partie utilisable du système de propulsion est la chambre de combustion (42), disposée en arrière de l'habitacle (4) dans le sens de lancement de l'engin spatial par fermeture d'un rétreint (46).

18. Aéronef selon la revendication 17, comportant une membrane (48) destinée à venir recouvrir des parois de la chambre de combustion (42) lorsqu'elle est transformée en extension de l'habitacle.

19. Aéronef selon la revendication 18, dans lequel la membrane (48) est déployée au moyen d'une source pneumatique (52).

20. Procédé d'extension de l'habitacle d'un avion muni d'au moins deux réservoirs, comportant l'étape de transformation d'un des deux réservoirs en zone habitable au sol avant le décollage de l'avion de sorte à augmenter le nombre de passager qui peut être embarqué ou le volume des marchandises pouvant être embarqué.

21. Procédé d'extension selon la revendication 20, dans lequel lors de cette étape des plateformes munies de fauteuils sont fixées dans le réservoir.

22. Procédé d'extension de l'habitacle d'un aéronef dans une partie d'un système de propulsion dudit aéronef, ledit aéronef comportant un fuselage comprenant ledit habitacle pour recevoir des personnes et/ou un chargement et ledit système de propulsion, ledit procédé comportant une étape de transformation de ladite partie du système de propulsion en vol.

23. Procédé d'extension de l'habitacle d'un aéronef selon la revendication 22, dans lequel le système de propulsion comporte au moins deux réservoirs, comportant les étapes :
a) de vidange d'un des réservoirs lorsqu'il est presque vide,
b) de mise en place d'éléments d'aménagement.

24. Procédé d'extension de l'habitacle d'un aéronef selon la revendication 23 comportant entre l'étape a) et l'étape b), une étape de pliage d'une poche ayant contenu un carburant ou comburant.

25. Procédé d'extension de l'habitacle d'un aéronef selon la revendication 22 dans lequel le système de propulsion comporte une chambre de combustion, ledit procédé comportant les étapes :
a') de fermeture d'un rétreint pour isoler la chambre de combustion de l'environnement extérieur à l'aéronef,
b') de mise en place d'une atmosphère dans la chambre de combustion.

26. Procédé d'extension de l'habitacle d'un aéronef selon la revendication 25, comportant entre les étapes a') et b'), une étape de déploiement d'une membrane pour recouvrir l'intérieur de la chambre dé combustion, l'atmosphère étant mise en place à l'intérieur de cette membrane.

## Patentansprüche

1. Luftfahrzeug, umfassend einen Rumpf (2) mit einer Kabine (4) zur Aufnahme von Personen und/oder einer Ladung und ein Antriebssystem, wobei das genannte Antriebssystem wenigstens einen Tank (6) und/oder eine Brennkammer (42) umfasst, bei dem ein Teil des Antriebssystems als Erweiterung der genannten Kabine (4) zur Aufnahme von Personen und/oder einer Ladung nutzbar ist,
**dadurch gekennzeichnet, dass** der genannte Teil des Antriebssystems an die Kabine (4) angrenzt und von der Kabine durch eine Zwischenwand (10) getrennt ist.

2. Luftfahrzeug nach Anspruch 1, bei dem das Antriebssystem wenigstens zwei Tanks (6, 8, 6.1, 6.2, 8.1, 8.2), einen konvertiblen Tank (6, 6.1, 6.2) und einen einfachen Tank (8, 8.1, 8,2) umfasst, wobei die genannte Erweiterung der Kabine (4) den konvertiblen Tank (6, 6.1, 6.2) umfasst.

3. Luftfahrzeug nach Anspruch 2, bei dem am Ausgang des genannten konvertiblen Tanks ein Filter (20) vorgesehen ist, um die von den Passagieren und/oder der Ladung in den konvertiblen Tank (6, 6.1, 6.2) eingeschleppten Verunreinigungen zu filtern.

4. Luftfahrzeug nach Anspruch 2, bei dem der konvertible Tank (6, 6.1, 6.2) einen nachgiebigen Sack (29) zur Aufnahme eines Treibstoffs oder Sauerstoffträgers umfasst, und ein Behältnis (31), wobei das Behältnis (31) die Erweiterung der Kabine bildet, wenn der Sack (29) zusammengefaltet ist.

5. Luftfahrzeug nach dem vorhergehenden Anspruch, bei dem die Zwischenwand (10) so verstärkt ist, dass sie den durch den Treibstoff im Sack ausgeübten Druck aushält.

6. Luftfahrzeug nach Anspruch 4 oder 5, bei dem ein spinnennetzförmiges nachgiebiges Verstärkungselement (38) den Sack umgibt.

7. Luftfahrzeug nach einem der vorhergehenden Ansprüche 2 bis 6, bei dem der konvertible Tank mindestens eine in dem Rumpf ausgebildete Luke (12) für das Ein- und Aussteigen der Passagiere und/oder das Laden der Waren, mindestens einen Notausgang (16), eine Verbindungsluke (18) mit der Kabine (4) und eine Ablasseinrichtung des restlichen Treibstoffs umfasst.

8. Luftfahrzeug nach dem vorhergehenden Anspruch, bei dem die Verbindungsluke (18) zwischen dem konvertiblen Tank (6, 6.1, 6.2) und der Kabine (4) auf ihrer Außenkontur eine Schulter (34) umfasst, dazu bestimmt, die durch den in dem Sack (29) enthaltenen Treibstoff verursachte Belastung mit einer vom Tank zur Kabine weisenden Richtung (4) auf der Wand abzustützen.

9. Luftfahrzeug nach einem der Ansprüche 2 bis 8, bei dem der konvertible Tank (6, 6.1, 6.2) einen Boden (24) umfasst, auf dem die Passagiere gehen können und/oder die Ladung gelagert werden kann.

10. Luftfahrzeug nach einem der Ansprüche 2 bis 9, bei dem der konvertible Tank (6, 6.1, 6.2) Befestigungsmittel (25) für Einrichtungselemente und/oder aufblasbare Einrichtungselemente (26), dazu bestimmt, aufgeblasen zu werden, wenn der konvertible Tank (6, 6.1, 6.2) als Kabinenerweiterung genutzt wird, und/oder in den Wänden des konvertiblen Tanks (6, 6.1, 6.2) verborgene Einrichtungselemente umfasst.

11. Luftfahrzeug nach einem der Ansprüche 1 bis 10, bei dem zwischen Kabine und Kabinenerweiterung ein Luftverteil- und -umwälzsystem vorgesehen ist.

12. Luftfahrzeug nach Anspruch 11, bei dem das genannte Luftverteil- und -umwälzsystem (33) auf der Seite der Kabinenerweiterung aufblasbare Leitungen umfasst.

13. Luftfahrzeug nach einem der Ansprüche 1 bis 12, das ein Flugzeug bildet.

14. Luftfahrzeug nach Anspruch 13, bei dem sich der konvertible Tank (6) und der einfache Tank (8) beiderseits der Kabine befinden, in einer Längsrichtung (X) des Luftfahrzeugs.

15. Luftfahrzeug nach Anspruch 13, bei dem sich der konvertible Tank (6.1, 6.2) und der einfache Tank (8.1, 8.2) zum Teil in den Flügeln und zum Teil in den Flanken des Luftfahrzeugs befinden, wobei die konvertiblen Tanks (6.1, 6.2) in den Flanken des Luftfahrzeugs angeordnet sind.

16. Luftfahrzeug nach einem der Ansprüche 1 bis 12, das ein Raumfahrzeug bildet.

17. Luftfahrzeug nach Anspruch 16, bei dem der nutzbare Teil des Antriebssystems die in der Abschussrichtung des Raumfahrzeugs hinter der Kabine (4) angeordnete Brennkammer (42) ist, durch Verschließen einer Einschnürung.

18. Luftfahrzeug nach Anspruch 17 mit einer Membran (48) zur Verkleidung der Wände der Brennkammer (42), wenn sie zur Kabinenerweiterung umgewandelt wird.

19. Luftfahrzeug nach Anspruch 18, bei dem die Membran (48) mit Hilfe einer pneumatischen Quelle (52) entfaltet wird.

20. Verfahren zur Erweiterung der Kabine eines mit wenigstens zwei Tanks versehenen Flugzeugs, umfassend den Schritt zur Umwandlung eines der beiden Tanks vor dem Start des Flugzeugs, am Boden, zur Erhöhung der Passagierzahl oder des Frachtvolumens, in eine nutzbare Zone.

21. Verfahren zur Erweiterung nach Anspruch 20, bei dem während dieses Schritts mit Sitzen versehene Bühnen in dem Tank befestigt werden.

22. Verfahren zur Erweiterung der Kabine eines Luftfahrzeugs in einem Teil eines Antriebssystems des genannten Luftfahrzeugs, wobei das genannte Luftfahrzeug einen Rumpf umfasst, der die genannte Kabine zur Aufnahme von Personen und/oder einer Ladung enthält und das genannte Verfahren dabei einen Schritt zur Umwandlung des genannten Teils des Systems im Flug umfasst.

23. Verfahren zur Erweiterung der Kabine eines Luftfahrzeugs nach Anspruch 22, bei dem das Antriebssystem wenigstens zwei Tanks umfasst, folgende Schritte umfassend:
a) Entleerung eines der Tanks, wenn er fast leer ist,
b) Einbau von Einrichtungselementen.

24. Verfahren zur Erweiterung der Kabine eines Luftfahrzeugs nach Anspruch 23, zwischen dem Schritt a) und dem Schritt b) einen Schritt zum Zusammenfalten eines Sacks umfassend, der einen Treibstoff oder Sauerstoffträger enthalten hat.

25. Verfahren zur Erweiterung der Kabine eines Luftfahrzeugs nach Anspruch 22, bei dem das Antriebssystem eine Brennkammer umfasst, wobei das genannte Verfahren die folgenden Schritte umfasst:
a') Verschließen einer Einschnürung, um die Brennkammer von der Außenumgebung des Luftfahrzeugs zu isolieren,
b') Erzeugen einer Atmosphäre in der Brennkammer.

26. Verfahren zur Erweiterung der Kabine eines Luftfahrzeugs nach Anspruch 25 mit - zwischen den Schritten a') und b') - eines Schritts zur Entfaltung einer Membran, um das Innere der Brennkammer zu verkleiden, wobei die Atmosphäre innerhalb dieser Membran erzeugt wird.

## Claims

1. Aircraft comprising a fuselage (2) containing a cabin (4) to accommodate persons and/or a load and a propulsion system, said propulsion system comprising at least one tank (6) and/or a combustion chamber (42), in which part of the propulsion system can be used as an extension of said cabin (4) to accommodate persons and/or a load, **characterized in that** said part of the propulsion system lies adjacent the cabin (4) and separated from the cabin by a partition (10).

2. Aircraft according to claim 1, wherein the propulsion system comprises at least two tanks (6, 8, 6.1, 6.2, 8.1, 8.2), a convertible tank (6, 6.1, 6.2) and a plain tank (8, 8.1, 8.2), said extension of the cabin (4) containing the convertible tank (6, 6.1, 6.2).

3. Aircraft according to claim 2, wherein a filter (20) is provided at the exit of said convertible tank (6, 6.1, 6.2) to filter pollutants brought by passengers and/or the load in the convertible tank (6, 6.1, 6.2).

4. Aircraft according to claim 2, wherein the convertible tank (6, 6.1, 6.2) comprises a flexible pouch (29) to hold fuel or oxidizer, and a container (31) to contain the pouch (29), the container (31) forming the extension of the cabin once the pouch (29) has been folded away.

5. Aircraft according to the preceding claim, wherein the partition (10) is reinforced so that it can withstand the pressure exerted by the fuel in the pouch.

6. Aircraft according to claim 4 or 5, wherein a flexible reinforcement element (38) in the shape of a spider web surrounds the pouch.

7. Aircraft according to any of claims 2 to 6, wherein the convertible tank comprises at least one hatchway (12) formed in the fuselage to embark and disembark passengers and/or to load goods, at least one emergency evacuation exit (16), a communicating hatchway (18) with the cabin (4) and drainage means (14) to drain remaining fuel.

8. Aircraft according to the preceding claims, wherein the communicating hatchway (18) between the convertible tank (6, 6.1, 6.2) and the cabin (4) comprises a shoulder (34) on its outer contour intended to bear against the partition (10) in a tank to cabin (4) direction under the force exerted by the fuel contained in the pouch (29).

9. Aircraft according to any of claims 2 to 8, wherein the convertible tank (6, 6.1, 6.2) comprises a floor (24) on which passengers can walk and/or on which a load can be stored.

10. Aircraft according to any of claims 2 to 9, wherein the convertible tank (6, 6.1, 6.2) comprises attachment means (25) to secure furnishing elements and/or inflatable furnishing means (26) intended to be inflated when the convertible tank (6, 6.1, 6.2) is converted to a cabin extension and/or furnishing elements concealed in the walls of the convertible tank (6, 6.1, 6.2).

11. Aircraft according to any of claims 1 to 10, wherein an air distribution and circulation system (33) is provided between the cabin and the cabin extension.

12. Aircraft according to claim 11, wherein said air distribution and circulation system (33) comprises inflatable ducts on the side of the cabin extension.

13. Aircraft according to any of claims 1 to 12 forming an airplane.

14. Aircraft according to claim 13, wherein the convertible tank (6) and the plain tank (8) are arranged either side of the cabin in a longitudinal direction (X) of the aircraft.

15. Aircraft according to claim 13, wherein the convertible tank (6.1, 6.2) and the plain tank (8.1, 8.2) are partly located in the wings and partly in the sidewalls of the aircraft, the convertible tanks (6.1, 6.2) being arranged in the sidewalls of the aircraft.

16. Aircraft according to any of claims 1 to 12 forming a spacecraft.

17. Aircraft according to claim 16, wherein the usable portion of the propulsion system is the combustion chamber (42), arranged aft of the cabin (4) in the direction of launch of the spacecraft by closure of a throat (46).

18. Aircraft according to claim 17, comprising a membrane (48) intended to cover the walls of the combustion chamber (42) when it is converted to a cabin extension.

19. Aircraft according to claim 18, wherein the membrane (48) is deployed by means of a pneumatic source (52).

20. Method to extend the cabin of an airplane equipped with at least two tanks, comprising the step to convert one of the tanks into an accommodation area on the ground before take-off of the airplane in such manner that the number of passengers that can embark is increased or the volume of the cargo that can be embarked is increased.

21. Extension method according to claim 20 wherein, during this step, platforms provided with seats are fastened in the tank.

22. Method to extend the cabin of an aircraft into part of a propulsion system of said aircraft, said aircraft comprising a fuselage containing said cabin to accommodate persons and/or a load and said propulsion system, said method comprising a step for in-flight conversion of said part of the propulsion system.

23. Method to extend the cabin of an aircraft according to claim 22, wherein the propulsion system comprises at least two tanks, comprising the steps of:
a) draining one of the tanks when it is almost empty,
b) installing furnishing elements.

24. Method to extend the cabin of an aircraft according to claim 23 which, between step a) and step b), comprises a step to fold away a flexible pouch which contained a fuel or oxidizer.

25. Method to extend the cabin of an aircraft according to claim 22, wherein the propulsion system comprises a combustion chamber, said method comprising the steps of:
a') closing a throat to isolate the combustion chamber from the environment outside the aircraft,
b') setting up an atmosphere in the combustion chamber.

26. Method to extend the cabin of an aircraft according to claim 25 which, between steps a') and b'), comprises a step to deploy a membrane to cover the inside of the combustion chamber, the atmosphere being set up inside this membrane.
